# EUROPEAN PATENT APPLICATION

(11) **EP 4 550 910 A1**
(43) Date of publication of application: **07.05.2025**
(21) Application number: 23830126.1
(22) Date of filing: 25.06.2023
(51) Int. Cl.: H04W 72/04

(54) **METHOD EXECUTED BY USER EQUIPMENT, AND USER EQUIPMENT**

(30) Priority: 30.06.2022 CN 202210776956
(71) Applicant: Sharp Kabushiki Kaisha, Sakai City, Osaka 590-8522 (JP)
(72) Inventor: LIU, Renmao, Shanghai 201206 (CN); LIU, Lei, Shanghai 201206 (CN)
(74) Representative: Müller Hoffmann & Partner
(86) International application number: PCT/CN2023/102093
(87) International publication number: WO 2024/001948

(57) **Abstract**

Provided in the present invention are a method performed by user equipment and user equipment. The method performed by user equipment includes: receiving, by a UE, a message from a network, the message including an L2 U2U relay communication parameter configuration used to perform relay communication between the UE and another UE via a relay UE, the UE being one of a source UE and a target UE, and the other UE being the other of the source UE and the target UE; and transmitting, by the UE in an RRC_CONNECTED state, a SidelinkUEInformationNR message to the network when at least one of the following situations occurs: a source side PC5 QoS profile changes; a target side PC5 QoS profile changes; an SL-DRB changes; a dedicated PC5 relay RLC channel configuration is requested for L2 U2U relay communication; and a dedicated PC5 sidelink relay adaptation protocol configuration is requested for L2 U2U relay communication. As a result, a source side PC5 QoS requirement and a target side PC5 QoS requirement can be guaranteed, and a PC5 QoS requirement between source UE and target UE can be guaranteed, thereby guaranteeing service experience and quality of service.

## Description

### TECHNICAL FIELD

The present invention relates to the technical field of wireless communications. More specifically, the present invention relates to a method for parameter configuration in a sidelink relay architecture performed by user equipment, and corresponding user equipment.

### BACKGROUND ART

At the RAN#91 plenary meeting in March 2020, a work item on NR sidelink relaying for Release 17 was proposed (see Non-Patent Document: RP-210904, New Study Item on NR Sidelink Relaying), and was approved. Regarding the latest release of the work item, see Non-Patent Document: RP-212601, Revised WID: NR Sidelink Relay. One of the goals of the work item is to standardize a sidelink control plane procedure, such as management of an RRC connection, reception of a system message, and reception of paging. The goals of the work item further include standardizing a selection and reselection procedure of sidelink relay UE.

At the RAN#94 plenary meeting in December 2021, a work item on NR sidelink relay enhancements of Release 18 was proposed (see Non-Patent Document: RP-213585, New WID on NR sidelink relay enhancements), and was approved. One of the goals of the work item is to standardize a control plane procedure for U2U (UE-to-UE) relay.

The present invention discusses a procedure of configuring related parameters required for data and signaling transmission by a source UE and a target UE via a relay UE.

### SUMMARY OF THE INVENTION

In order to address the above issue in the prior art, the present invention provides a method performed by user equipment, and user equipment, so that data can be appropriately relayed and forwarded between a source UE and a target UE. A source side PC5 QoS requirement and a target side PC5 QoS requirement can be guaranteed, and a PC5 QoS requirement between the source UE and the target UE can be guaranteed, thereby guaranteeing service experience and quality of service.

According to a first aspect of the present invention, a method performed by user equipment (UE) is provided, comprising: receiving, by a UE, a message from a network, the message comprising a layer 2 UE-to-UE (L2 U2U) relay communication parameter configuration used to perform relay communication between the UE and another UE via a relay UE, the UE being one of a source UE and a target UE, and the other UE being the other of the source UE and the target UE; and transmitting, by the UE in an RRC_CONNECTED state, a SidelinkUEInformationNR message to the network when at least one of the following situations occurs: a source side PC5 quality of service (QoS) profile changes; a target side PC5 QoS profile changes; a sidelink data radio bearer (SL-DRB) changes; a dedicated PC5 relay RLC channel configuration is requested for L2 U2U relay communication; and a dedicated PC5 sidelink relay adaptation protocol configuration is requested for L2 U2U relay communication.

In the above method, optionally, the SidelinkUEInformationNR message comprises at least one of the following pieces of information: a source side PC5 QoS profile; a target side PC5 QoS profile; an SL-DRB identity; a dedicated PC5 relay RLC channel configuration request indication; and a dedicated PC5 sidelink relay adaptation protocol configuration request indication.

According to a second aspect of the present invention, a method performed by user equipment (UE) is provided, wherein when the UE receives a system message transmitted by a network and comprising an L2 U2U relay communication parameter configuration for performing relay communication between the UE and another UE via a relay UE, the UE in an RRC_IDLE state or an RRC_INACTIVE state initiates a sidelink RRC reconfiguration procedure using the L2 U2U relay communication parameter configuration carried in the system message, the UE being one of source UE and target UE, and the other UE being the other of the source UE and the target UE; or, when the UE receives a dedicated RRC message transmitted by the network and comprising an L2 U2U relay communication parameter configuration, the UE in an RRC_CONNECTED state initiates a sidelink RRC reconfiguration procedure using the L2 U2U relay communication parameter configuration carried in the RRC message; or when the UE is out of coverage of the network, the UE initiates a sidelink RRC reconfiguration procedure using an L2 U2U relay communication parameter configuration carried in an NR sidelink pre-configuration.

In the above method, optionally, one of a source side PC5 relay RLC channel and a target side PC5 relay RLC channel is set to be a first side PC5 relay RLC channel, and the other is set to be a second side PC5 relay RLC channel, and when the UE determines that a first side PC5 relay RLC channel addition or modification or release condition is satisfied, the UE performs a first side PC5 relay RLC channel addition or modification or release procedure.

In the above method, optionally, for the first side PC5 relay RLC channel that needs to be added or modified or released, the UE transmits an RRCReconfigurationSidelink message to the relay UE or the other UE, and includes a first side PC5 relay RLC channel addition or modification or release list in the message.

In the above method, optionally, the relay UE receives the RRCReconfigurationSidelink message from the UE, and when the RRCReconfigurationSidelink message comprises first side PC5 relay RLC channel addition or modification or release information, the relay UE determines whether a second side PC5 relay RLC channel addition or modification or release condition is satisfied, and when it is determined that the condition is satisfied, performs a second side PC5 relay RLC channel addition or modification or release procedure.

In the above method, optionally, for the second side PC5 relay RLC channel that needs to be added or modified or released, the relay UE transmits an RRCReconfigurationSidelink message to the other UE, and includes a second side PC5 relay RLC channel addition or modification or release list in the message.

In the above method, optionally, when it is determined that a sidelink data radio bearer (SL-DRB) needs to be added or modified or released, the UE transmits a PC5-RRC message to the relay UE.

In the above method, optionally, the relay UE receives the PC5-RRC message from the UE, determines whether a first side PC5 relay RLC channel addition or modification or release condition is satisfied, and when it is determined that the condition is satisfied, performs a first side PC5 relay RLC channel addition or modification or release procedure; for a first side PC5 relay RLC channel that needs to be added or modified or released, the relay UE transmits an RRCReconfigurationSidelink message to the UE or the other UE, and includes a first side PC5 relay RLC channel addition or modification or release list in the message.

According to a third aspect of the present invention, provided is user equipment, comprising: a processor; and a memory, having instructions stored therein, wherein the instructions, when run by the processor, perform the above method.

### Effect of Invention

According to the present invention, data can be appropriately relayed and forwarded between source UE and target UE. A source side PC5 QoS requirement and a target side PC5 QoS requirement can be guaranteed, and a PC5 QoS requirement between the source UE and the target UE can be guaranteed, thereby guaranteeing service experience and quality of service.

### BRIEF DESCRIPTION OF THE DRAWINGS

FIG. 1 is a schematic diagram showing relaying and forwarding performed between remote UEs via a relay UE.
FIG. 2 is a schematic diagram showing control plane protocol stacks of a source UE, a relay UE, and a target UE in a U2U sidelink L2 relay architecture.
FIG. 3 is a schematic diagram showing user plane protocol stacks of a source UE, a relay UE, and a target UE in a U2U sidelink L2 relay architecture.
FIG. 4 is a schematic diagram showing source side PC5 QoS, target side PC5 QoS, and end-to-end QoS in a U2U relay architecture.
FIG. 5 is a flowchart of a method applied to user equipment (UE) according to Embodiment 1 of the present invention.
FIG. 6 is a flowchart of a method applied to user equipment (UE) according to Embodiment 3 of the present invention.
FIG. 7 is a flowchart of a method applied to user equipment (UE) according to Embodiment 4 of the present invention.
FIG. 8 is a flowchart of a method applied to user equipment (UE) according to Embodiment 5 of the present invention.
FIG. 9 is a simplified structural block diagram of user equipment (UE) according to the present invention.

### DETAILED DESCRIPTION OF PREFERRED EMBODIMENTS

The following describes the present invention in detail with reference to the accompanying drawings and specific embodiments. It should be noted that the present invention should not be limited to the specific embodiments described below. In addition, detailed descriptions of well-known technologies not directly related to the present invention are omitted for the sake of brevity, in order to avoid obscuring the understanding of the present invention.

The following describes some terms involved in the present invention. For the specific meanings of the terms, please see the latest 3GPP standards and specifications.
UE: User Equipment
NR: New Radio
MAC: Medium Access Control
MAC CE: MAC control element
RLC: Radio Link Control
SDAP: Service Data Adaptation Protocol
PDCP: Packet Data Convergence Protocol
RRC: Radio Resource Control
RRC_CONNECTED: RRC connected state
RRC_INACTIVE: RRC inactive state
RRC_IDLE: RRC idle state
RAN: Radio Access Network
Sidelink: sidelink
SL: Sidelink
SCI: Sidelink Control Information
AS: Access Stratum
IE: Information Element
CE: Control Element
MIB: Master Information Block
NR: New Radio
SIB: System Information Block
NG-RAN: NG Radio Access Network
DCI: Downlink Control Information
ADAPT: adaptation layer
PHY: physical layer
RB: Radio Bearer
DRB: Data Radio Bearer
SRB: Signalling Radio Bearer
eDRX: Extended DRX
Uu: Uu
ProSe: Proximity based Services
V2X: Vehicle-to-Everything
NAS: Non-Access Stratum
PC5-S: PC5 signalling
SRAP: Sidelink Relay Adaptation Protocol
SL-SRB: Sidelink Signalling Radio Bearer
SL-DRB: Sidelink Data Radio Bearer
U2U: UE-to-UE
L2: Layer 2
RSRP: Reference Signal Received Power
QoS: Quality of Service
PQFI: PC5 QoS Flow ID
QFI: QoS Flow ID
SQI: 5G QoS Identifier
PQI: PC5 QoS Identifier
GFBR: Guaranteed Flow Bit Rate
MFBR: Maximum Flow Bit Rate
PC5LINK-AMBR: per link Aggregate Maximum Bit Rate

In the present invention, a network (or NW), a base station (or gNB or eNB) and a RAN may be used interchangeably. The network may be a Long Term Evolution (LTE) network, a new RAT (NR) network, an enhanced Long Term Evolution (eLTE) network, or another network defined in a subsequent evolved version of the 3GPP.

In the present invention, user equipment (UE) may refer to an NR device that supports an NR sidelink relay function as described in the background, may also refer to an NR device that supports an NR sidelink relay architecture, and may also refer to an NR device or an LTE device of another type. A source UE and a target UE may refer to two UEs connected to each other via a relay UE in a UE-to-UE relay architecture. One of them is the source UE and the other is the target UE. A source side may also be referred to as an initiation side, and a target side may also be referred to as a destination side, which may be used interchangeably in the present invention.

For a U2U scenario, "relay", "U2U relay" and "L2 U2U relay" may be used interchangeably. "Remote", "U2U remote" and "L2 U2U remote" may be used interchangeably. "Source UE", "source remote UE", "U2U source UE", "source side UE" and "L2 U2U source UE" may be used interchangeably. "Target UE", "target remote UE", "U2U target UE", "target side UE" and "L2 U2U target UE" may be used interchangeably.

In the present invention, sidelink, SL, and PC5 are interchangeable. "Feedback", "submit", "report", "send", "transmit or transport", and" inform" may be used interchangeably. "Use", "be available", "apply", "implement", "enable", "active", "perform" and the like may be used interchangeably. "Associate", "correspond", and "map" may be used interchangeably.

In the present invention, an upper layer may refer to a ProSe layer, a V2X layer, a NAS layer, or a PCS-S protocol layer. In the present invention, the ProSe layer, the V2X layer, the NAS layer, and the PCS-S protocol layer are interchangeable.

In the present invention, RLC channel, RLC entity and RLC bearer may be used interchangeably. Optionally, "relay" and/or "PCS relay" and/or "SL Relay" may further be added to modify or define the foregoing terms.

In the present invention, "source", "source side" and "source part" may be used interchangeably, and "target", "target side" and "target part" may be used interchangeably. Optionally, "L2 U2U" or "L2 U2U relay" may further be added to modify or define the foregoing terms. "Source PC5 relay RLC channel" and "source PC5 RLC channel" may be used interchangeably, and "target PC5 relay RLC channel" and "target PC5 RLC channel" may be used interchangeably. The names of the source PC5 relay RLC channel and the target PC5 relay RLC channel are only examples, and any other names capable of representing the PC5 RLC channel having the described features may be used.

In the present invention, PQFI and PFI may be used interchangeably. "QoS profile" and "QoS parameters" may be used interchangeably.

It should be noted that in the present specification, two items that are connected by "and", "or", or "and/or" may indicate different expression methods for the same intent in different application scenarios. It is possible that a relationship of including or being included in is present between the two items, but it is not necessary that the two items refer to completely different content.

Hereinafter, a description will be given of related art of the present invention.

A PC5 interface is an interface for performing control plane and user plane sidelink communication between UE and UE. For sidelink unicast, a PC5-RRC connection is an AS layer logical connection between a pair of a source layer-2 ID and a target layer-2 ID. The upper layer sets up a PC5 unicast link for sidelink unicast communication, and setup of one PC5 unicast link corresponds to setup of one PC5-RRC connection.

In the unicast PC5-RRC connection, the SL-SRB is used to carry a PCS-S message and a PC5-RRC message. An SL-SRB0 is used to carry a PCS-S message before establishment of PC5-S security, an SL-SRB 1 is used to carry a PCS-S message for a PCS-S security establishment procedure, an SL-SRB2 is used to carry a PCS-S message after establishment of PCS-S security, and an SL-SRB3 is used to carry a PC5-RRC message.

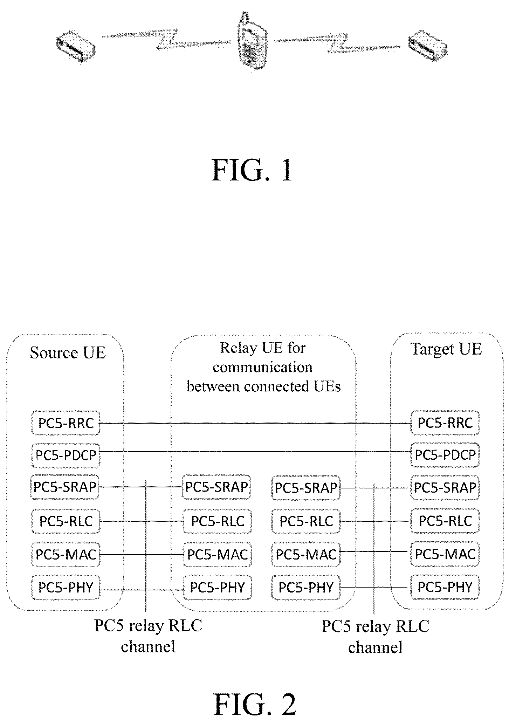

UE-to-UE relaying is as shown in FIG. 1. The left and the right are remote UE, and the middle is a relay UE. The remote UEs are respectively connected to the relay UE by means of PC5 interfaces. Because the two remote UEs are far from each other or because a communication environment is poor, the relay UE is needed to relay and forward signaling and data therebetween.

UE-to-UE relay scenarios include:
1) in coverage: the two remote UEs (i.e., the source UE and the target UE) and the relay UE are all in coverage;
2) out of coverage: the two remote UEs (i.e., the source UE and the target UE) and the relay UE are all out of coverage; and
3) partial coverage: among the two remote UEs and the relay UE, at least one UE is in coverage, and at least one UE is out of coverage.

For the NR sidelink L2 U2U relay architecture, two remote UEs (i.e., a source UE and a target UE) each set up a PC5-RRC connection to the relay UE, and the two remote UEs (i.e., the source UE and the target UE) also set up a PC5-RRC connection therebetween. The two remote UEs (i.e., the source UE and the target UE) communicate with each other via the relay UE.

For a U2U sidelink layer-2 (L2) relay architecture, control plane protocol stacks of a source UE, a relay UE, and a target UE are as shown in FIG. 2.

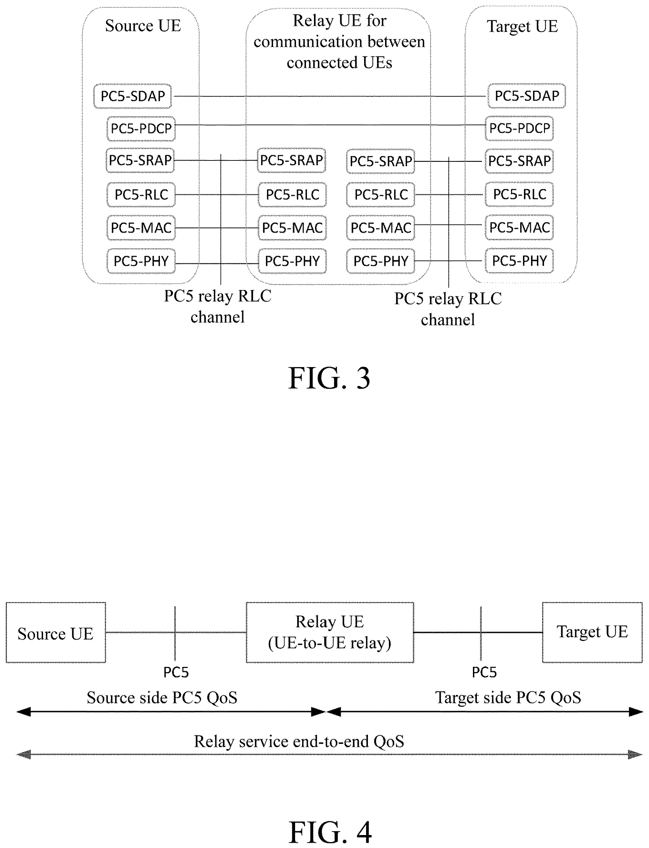

For a U2U sidelink layer-2 (L2) relay architecture, user plane protocol stacks of a source UE, a relay UE, and a target UE are as shown in FIG. 3.

A PC5 RLC channel refers to an RLC channel for PC5 interface communication. A PC5 relay RLC channel may refer to an RLC channel that relays, forwards, and transmits signalling and data for L2 U2U relay via a PC5 interface. In the U2U architecture, when the source UE is connected to the target UE via the relay UE, the PC5 relay RLC channel between the source UE and the relay UE, and the PC5 relay RLC channel between the relay UE and the target UE may be used to carry data and signaling between the source UE and the target UE, namely, to carry the SL-SRB and the SL-DRB between the source UE and the target UE. The PC5 relay RLC channel between the source UE and the relay UE may be referred to as a source PC5 relay RLC channel, and the PC5 relay RLC channel between the relay UE and the target UE may be referred to as a target PC5 relay RLC channel.

The PCS-SRAP entity refers to an SRAP entity for PC5 interface communication, and PCS-SRAP is an adaptation layer for the L2 U2U architecture. In the L2 U2U architecture, when the source UE is connected to the target UE via the relay UE, the PCS-SRAP of the source UE determines, according to a configured mapping relationship between end-to-end bearers (i.e., bearers between the source UE and the target UE) and PC5 relay RLC channels, a PC5 relay RLC channel corresponding to uplink data/signaling (data sent by the source UE to the target UE) and a PC5 relay RLC channel corresponding to downlink data from the target UE and forwarded by the relay UE. PC5-SRAP entities respectively corresponding to the source UE and the target UE is also present in the relay UE. A PCS-SRAP is also present in the target UE, and has the same function as the PCS-SRAP in the source UE. The entity and the layer, such as a SRAP entity or a SRAP layer, are interchangeable herein.

The upper layer sets up a PC5 unicast link between the source UE and the target UE (followed by the AS layer also setting up a PC5-RRC connection), and sets up several SL QoS flows on the PC5 unicast link according to data requirements. For different PC5 QoS requirements, different SL QoS flow bearers may be set up. An SL QoS flow is identified by a PQFI. The upper layer transmits the PQFI, the PC5 QoS parameter, and the PC5 link identifier to the AS layer. The PC5 QoS parameter, which may also be referred to as a PC5 QoS profile, may include information such as a PQI, a PC5 flow bit rate (e.g., a GFBR, an MFBR), a per link aggregate maximum bit rate (PCSLINK-AMBR), a priority, an average window, a maximum data volume, etc. At the AS layer, the PC5 QoS flow is borne by the SL-DRB. A PCS-SDAP entity refers to an SDAP entity used for PC5 interface communication. The PCS-SDAP may implement mapping between a PC5 QoS flow and an SL-DRB of the user plane AS layer.

For a UE-to-UE relay architecture, as shown in FIG. 4, QoS of a source side PC5 interface and QoS of a target side PC5 interface are both guaranteed, thereby guaranteeing end-to-end QoS (i.e., QoS between the source UE and the target UE). The relay UE may also perform QoS splitting of an end-to-end QoS requirement, for example, into two QoS requirements, i.e., a source side PC5 QoS requirement and a target side PC5 QoS requirement. The relay UE notifies the source UE and the target UE of the QoS requirements obtained from the splitting.

According to the L2 U2U user plane protocol stack, there is no PCS-PDCP layer between the source UE and the relay UE; therefore there is no SL-DRB, and data is directly borne by the PC5 relay RLC channel. Therefore, when the relay UE relays and forwards data between the source UE and the target UE, the SL-SRAP layer of the relay UE needs to be capable of finding, according to the QoS requirements of different data, a suitable PC5 relay RLC channel to bear the data.

The present invention discusses operations and configuration procedures that a source UE, a target UE and a relay UE each need to perform when the source UE and the target UE perform user plane data transmission via the relay UE in an L2 U2U scenario. The present invention enables a PC5 relay RLC channel and a PC5 SRAP parameter to be correctly set, so that data between the source UE and the target UE is relayed and forwarded via a suitable source side PC5 relay RLC channel and a suitable target side PC5 relay RLC channel, thereby guaranteeing a source side PC5 QoS requirement and a target side PC5 QoS requirement, guaranteeing an end-to-end (i.e., between the source UE and the target UE) PC5 QoS requirement, and accordingly guaranteeing service experience and quality of service.

Hereinafter, several embodiments of the present invention for addressing the above problems are described in detail.

In the following several embodiments, the *RRCReconfigurationSidelink* message and the *RRCReconfigurationSidelinkComplete* message are only examples, and other PC5-RRC messages may be used to carry related information described in the embodiments.

In the following several embodiments, a first side PC5 relay RLC channel may be a source side PC5 relay RLC channel or a target side PC5 relay RLC channel. If the first side PC5 relay RLC channel is a source side PC5 relay RLC channel, a second side PC5 relay RLC channel is a target side PC5 relay RLC channel. If the first side PC5 relay RLC channel is a target side PC5 relay RLC channel, the second side PC5 relay RLC channel is a source side PC5 relay RLC channel. If UE1 is a source UE, UE2 is a target UE. If UE1 is a target UE, UE2 is a source UE [0107]

### Embodiment 1

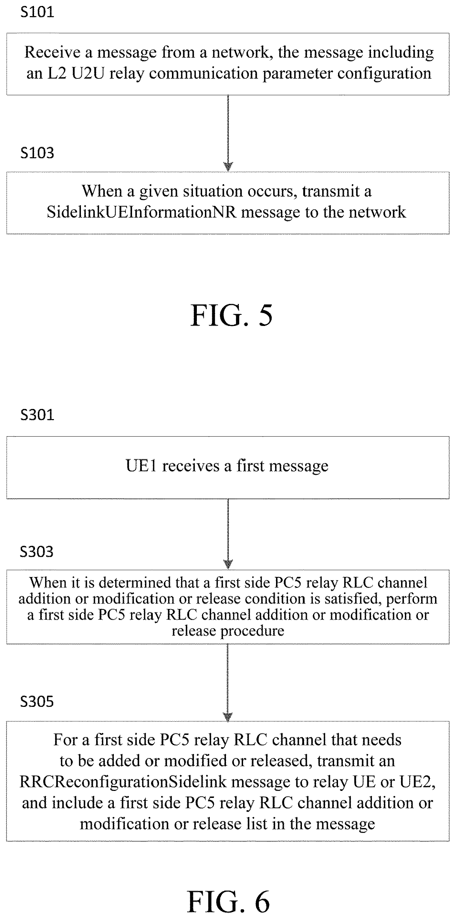

FIG. 5 is a flowchart of a method applied to user equipment (UE) according to Embodiment 1 of the present invention.

Optionally, in step 101, a UE receives a system message (e.g., SIB12) transmitted by a network, and the system message includes an L2 U2U relay communication parameter configuration. The L2 U2U relay communication parameter configuration refers to a parameter configuration for L2 U2U data and signalling reception and transmission.

Optionally, in step 103, the UE in an RRC_CONNECTED state initiates a procedure of transmitting a *SidelinkUEInformationNR* message to the network when at least one of the following situations occurs:
- a source side PC5 QoS profile changes;
- a target side PC5 QoS profile changes;
- an SL-DRB changes (for example, an SL-DRB identity changes);
- a dedicated PC5 relay RLC channel configuration is requested for L2 U2U relay communication (optionally, a dedicated source side PC5 relay RLC channel or a dedicated target side PC5 relay RLC channel is distinguished); and
- a dedicated PCS-SRAP configuration is requested for L2 U2U relay communication.

Optionally, the UE may refer to a UE capable of L2 U2U operation or a UE capable of U2U operation.

Optionally, the *SidelinkUEInformationNR* message may include at least one of the following pieces of information:
- a source side PC5 QoS profile;
- a target side PC5 QoS profile;
- a dedicated PC5 relay RLC channel configuration request indication (optionally, a source side PC5 relay RLC channel or a target side PC5 relay RLC channel is distinguished);
- a dedicated PCS-SRAP configuration request indication; and
- an SL-DRB identity.

The UE may refer to a source UE, or a relay UE, or a target UE. The SL-DRB refers to an SL-DRB between a source UE and a target UE.

The SL-DRB identity may include, but is not limited to: an SL-DRB index or an SL-DRB ID.

### Embodiment 2

Optionally, a UE receives a system message (e.g., SIBl2) transmitted by a network, and the system message includes an L2 U2U relay communication parameter configuration. The UE in an RRC_IDLE state or in RRC_INACTIVE initiates a sidelink RRC reconfiguration procedure using the L2 U2U relay communication parameter configuration carried in the system message.

Optionally, the UE receives a dedicated RRC message (for example, an RRCReconfiguration message) transmitted by the network, and the message includes an L2 U2U relay communication parameter configuration. The UE in an RRC_CONNECTED state initiates a sidelink RRC reconfiguration procedure using the L2 U2U relay communication parameter configuration carried in the message.

Optionally, the UE out of coverage initiates a sidelink RRC reconfiguration procedure using an L2 U2U relay communication parameter configuration carried in an NR sidelink pre-configuration (*SidelinkPreconfigNR*)*.*

Optionally, the L2 U2U relay communication parameter configuration includes at least one of the following configurations:
- a PCS-SRAP configuration; and
- a PC5 relay RLC channel configuration.

The PC5 relay RLC channel configuration may include a source side PC5 relay RLC channel configuration and/or a target side PC5 relay RLC channel configuration, and may further include a source side PC5 relay RLC channel addition/modification/release configuration, and/or a target side PC5 relay RLC channel addition/modification/release configuration.

Optionally, the PCS-SRAP configuration may include a first mapping configuration. A first mapping includes at least one of the following mappings:
- a mapping between a source side PC5 QoS profile and a source side PC5 relay RLC channel;
- a mapping between a target side PC5 QoS profile and a target side PC5 relay RLC channel;
- a mapping between an SL-DRB and a PC5 relay RLC channel (which may also be a mapping between an SL-DRB and a source side PC5 relay RLC channel, and/or a mapping between an SL-DRB and a target side PC5 relay RLC channel); and
- a mapping between a source side PC5 relay RLC channel and a target side PC5 relay RLC channel.

Optionally, the mapping between a source side PC5 QoS profile and a source side PC5 relay RLC channel may include at least one of the following parameters:
- a source side PC5 QoS profile;
- a source side egress PC5 relay RLC channel;
- a source UE egress PC5 relay RLC channel;
- a relay UE ingress PC5 relay RLC channel; and
- an SL-DRB identity (e.g., an SL-DRB index or an SL-DRB ID).

Optionally, the mapping between a target side PC5 QoS profile and a target side PC5 relay RLC channel may include at least one of the following parameters:
- a target side PC5 QoS profile;
- a target side ingress PC5 relay RLC channel;
- a target UE ingress PC5 relay RLC channel;
- a relay UE egress PC5 relay RLC channel; and
- an SL-DRB identity (e.g., an SL-DRB index or an SL-DRB ID).

Optionally, the mapping between an SL-DRB and a PC5 relay RLC channel may include at least one of the following parameters:
- an SL-DRB identity (e.g., an SL-DRB index or an SL-DRB ID);
- a source side egress PC5 relay RLC channel;
- a source UE egress PC5 relay RLC channel;
- a target side ingress PC5 relay RLC channel;
- a target UE ingress PC5 relay RLC channel;
- a relay UE ingress PC5 relay RLC channel; and
- a relay UE egress PC5 relay RLC channel.

Optionally, the mapping between a source side PC5 relay RLC channel and a target side PC5 relay RLC channel may include at least one of the following parameters:
- a source side egress PC5 relay RLC channel;
- a source UE egress PC5 relay RLC channel;
- a target side ingress PC5 relay RLC channel;
- a target UE ingress PC5 relay RLC channel;
- a relay UE ingress PC5 relay RLC channel; and
- a relay UE egress PC5 relay RLC channel.

The UE may refer to a source UE, or a relay UE, or a target UE. The SL-DRB refers to an SL-DRB between a source UE and a target UE. The egress PC5 relay RLC channel refers to an RLC channel used for transmitting relay data and/or signaling on a PC5 interface, and the ingress PC5 relay RLC channel refers to an RLC channel used for receiving relay data and/or signaling on a PC5 interface.

### Embodiment 3

FIG. 6 is a flowchart of a method applied to user equipment (UE) according to Embodiment 3 of the present invention.

Optionally, in step 301, UE1 receives a first message. The first message may be a system message (e.g., SIB 12), or a dedicated RRC message (e.g., an RRCReconfiguration message), or a PC5-RRC message (e.g., *RRCReconfigurationSidelink*)*.*

Optionally, in step 303, if UE1 determines that a first side PC5 relay RLC channel addition condition is satisfied, UE1 performs a first side PC5 relay RLC channel addition procedure.

The first side PC5 relay RLC channel addition condition includes at least one of the following:
- if the first message or the NR sidelink pre-configuration includes a configuration of adding the first side PC5 relay RLC channel;
- if an identifier included in the first message or the NR sidelink pre-configuration and used for adding and modifying a PC5 relay RLC channel in a first side PC5 relay RLC channel list is not part of a current sidelink configuration (or a current first side PC5 relay RLC channel configuration) of UE1;
- if it is determined, by means of the first message or the NR sidelink pre-configuration, that an SL-DRB addition needs to be initiated;
- if any SL-DRB is configured (or reconfigured) by means of the first message or the NR sidelink pre-configuration, and the SL-DRB is to be mapped to a first side PC5 relay RLC channel that has not yet been set up;
- if any PC5 relay RLC channel is configured (or reconfigured) by means of the first message or the NR sidelink pre-configuration, and the PC5 relay RLC channel is to be mapped to a first side PC5 relay RLC channel that has not yet been set up; and
- if any first side PC5 QoS profile is configured (or reconfigured) by means of the first message or the NR sidelink pre-configuration,
   - and the first side PC5 QoS profile is to be mapped to a first side PC5 relay RLC channel that has not yet been set up;
   - or, an SL-DRB associated with the first side PC5 QoS profile is to be mapped to a first side PC5 relay RLC channel that has not yet been set up;
   - or, an SL-DRB associated with a PQFI associated with the first side PC5 QoS profile is to be mapped to a source side PC5 relay RLC channel, but the first side PC5 relay RLC channel has not yet been set up.

The first side PC5 QoS profile may be a source side PC5 QoS profile or a target side PC5 QoS profile. If the first side PC5 relay RLC channel is a source side PC5 relay RLC channel, the first side PC5 QoS profile may be a source side PC5 QoS profile. If the first side PC5 relay RLC channel is a target side PC5 relay RLC channel, the first side PC5 QoS profile may be a target side PC5 QoS profile.

Or, optionally, in step 303, if UE1 satisfies a first side PC5 relay RLC channel modification condition, a first side PC5 relay RLC channel modification procedure is performed.

The first side PC5 relay RLC channel modification condition includes at least one of the following:
- if the first message or the NR sidelink pre-configuration includes a configuration of modifying the first side PC5 relay RLC channel;
- if an identifier included in the first message or the NR sidelink pre-configuration and used for adding and modifying a PC5 relay RLC channel in a first side PC5 relay RLC channel list is part of a current sidelink configuration (or a current first side PC5 relay RLC channel configuration) of UE1;
- if initiation of an SL-DRB modification is determined by means of the first message or the NR sidelink pre-configuration; and
- if any PC5 relay RLC channel related parameter for a first side PC5 relay RLC channel is modified by the first message or the NR sidelink pre-configuration.

Or, optionally, in step 303, if UE1 satisfies a first side PC5 relay RLC channel release condition, a first side PC5 relay RLC channel release procedure is performed.

The first side PC5 relay RLC channel release condition includes at least one of the following:
- if the first message or the NR sidelink pre-configuration includes a configuration of releasing the first side PC5 relay RLC channel;
- if an identifier included in the first message or the NR sidelink pre-configuration and used for releasing a PC5 relay RLC channel in a first side PC5 relay RLC channel list is part of a current sidelink configuration (or a current first side PC5 relay RLC channel configuration) of UE1;
- if initiation of an SL-DRB release is determined by means of the first message or the NR sidelink pre-configuration;
- if the first message or the NR sidelink pre-configuration includes release of a first side PC5 relay RLC channel (and optionally, SL-RLC-ChannelID of the first side PC5 relay RLC channel is included in a first side PC5 relay RLC channel release list);
- if data transmission occurs in none of SL-DRB(s) mapped to the first side PC5 relay RLC channel and configured or reconfigured by the first message or the NR sidelink pre-configuration; and
- if a PC5-RRC connection between source UE and target UE is released.

Optionally, in step 305, for each first side PC5 relay RLC channel that needs to be added or modified, UE1 transmits an *RRCReconfigurationSidelink* message to relay UE. Optionally, for each first side PC5 relay RLC channel that needs to be added or modified, UE1 transmits an *RRCReconfigurationSidelink* message to UE2. The *RRCReconfigurationSidelink* message carries a first side PC5 relay RLC channel addition and modification list, and a PC5 relay RLC channel identifier in the list is set to be an identifier of the first side PC5 relay RLC channel that needs to be added or modified.

Or, optionally, for each first side PC5 relay RLC channel that needs to be released, UE1 transmits an *RRCReconfigurationSidelink* message to the relay UE. Optionally, for each first side PC5 relay RLC channel that needs to be released, UE1 transmits an *RRCReconfigurationSidelink* message to UE2. The message carries a first side PC5 relay RLC channel release list, and a PC5 relay RLC channel identifier in the list is set to be an identifier of the first side PC5 relay RLC channel that needs to be released.

Optionally, the *RRCReconfigurationSidelink* message may further include a configuration of the first mapping.

Optionally, if step 305 exists, "performing a first side PC5 relay RLC channel addition procedure" in step 303 does not actually add a first side PC5 relay RLC channel, but UE1 adds a first side PC5 relay RLC channel after the relay UE or UE2 responds with an *RRCReconfigurationSidelinkComplete* message. The same operation also applies to the first side PC5 relay RLC channel modification and release procedures of UE1.

In the present embodiment, all second side PC5 relay RLC channel addition, modification and release conditions and procedures, and UE1 transmitting messages to the relay UE and UE2 to add, modify and release a second side PC5 relay RLC channel, are the same as corresponding processes of the first side PC5 relay RLC channel. That is, description of processing of the second side PC5 relay RLC channel can be obtained by replacing "first side" in the specific description statements in step 303 and step 305 with "second side", and will not be repeated for the sake of space.

### Embodiment 4

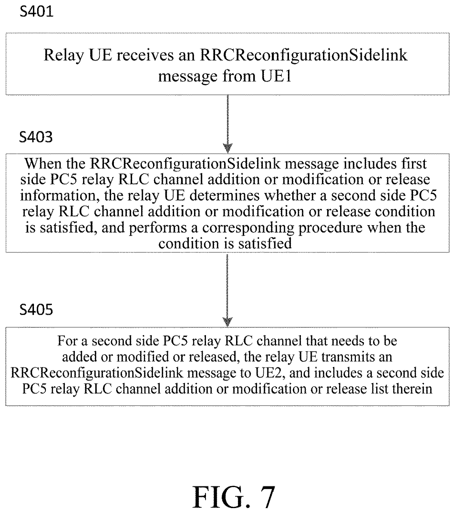

FIG. 7 is a flowchart of a method applied to user equipment (UE) according to Embodiment 4 of the present invention.

According to Embodiment 3, optionally, in step 401, a relay UE receives the *RRCReconfigurationSidelink* message transmitted by UE1, and the message carries the first side PC5 relay RLC channel addition and modification list, and/or the first side PC5 relay RLC channel release list, and/or the first mapping.

Optionally, in step 403, the relay UE determines whether a second side PC5 relay RLC channel addition condition is satisfied. If the relay UE satisfies the second side PC5 relay RLC channel addition condition, a second side PC5 relay RLC channel addition procedure is performed. Or, optionally, only if the *RRCReconfigurationSidelink* message includes first side PC5 relay RLC channel addition information, the relay UE determines whether the second side PC5 relay RLC channel addition condition is satisfied.

Including the first side PC5 relay RLC channel addition information may mean at least one of the following:
- including a first side PC5 relay RLC channel addition configuration;
- including a first side PC5 relay RLC channel addition and modification list, and a PC5 relay RLC channel identifier in the addition and modification list not being part of a current sidelink configuration of the relay UE; and
- including a first mapping addition modification list, and a PC5 relay RLC channel identifier in the addition and modification list not being part of the current sidelink configuration of the relay UE.

Or, optionally, in step 403, the relay UE determines whether a second side PC5 relay RLC channel modification condition is satisfied. If the relay UE satisfies the second side PC5 relay RLC channel modification condition, a second side PC5 relay RLC channel modification procedure is performed. Or, optionally, only if the *RRCReconfigurationSidelink* message includes first side PC5 relay RLC channel modification information, the relay UE determines whether the second side PC5 relay RLC channel modification condition is satisfied.

Including the first side PC5 relay RLC channel modification information may mean at least one of the following:
- including a first side PC5 relay RLC channel modification configuration;
- including a first side PC5 relay RLC channel addition modification list, and a PC5 relay RLC channel identifier in the addition modification list being part of the current sidelink configuration of the relay UE; and
- including a first mapping addition modification list, and a PC5 relay RLC channel identifier in the addition modification list being part of the current sidelink configuration of the relay UE.

Or, optionally, in step 403, the relay UE determining whether a second side PC5 relay RLC channel release condition is satisfied. If the relay satisfies the second side PC5 relay RLC channel release condition, a second side PC5 relay RLC channel release procedure is performed. Or, optionally, only if the *RRCReconfigurationSidelink* message includes first side PC5 relay RLC channel release information, the relay UE determines whether the second side PC5 relay RLC channel release condition is satisfied.

Including the first side PC5 relay RLC channel release information may mean at least one of the following:
- including a first side PC5 relay RLC channel release configuration;
- including a first side PC5 relay RLC channel release list, and a PC5 relay RLC channel identifier in the release list being part of the current sidelink configuration of the relay UE; and
- including a first mapping release list, and a PC5 relay RLC channel identifier in the addition and modification list being part of the current sidelink configuration of the relay UE.

In the present embodiment, the second side PC5 relay RLC channel addition condition is the same as the first side PC5 relay RLC channel addition condition in Embodiment 3. That is, description of the second side PC5 relay RLC channel addition condition can be obtained by replacing "first side" in each item of the first side PC5 relay RLC channel addition condition in Embodiment 3 with "second side". The second side PC5 relay RLC channel modification condition is the same as the first side PC5 relay RLC channel modification condition in Embodiment 3. That is, description of the second side PC5 relay RLC channel modification condition can be obtained by replacing "first side" in each item of the first side PC5 relay RLC channel modification condition in Embodiment 3 with "second side". The second side PC5 relay RLC channel release condition is the same as the first side PC5 relay RLC channel release condition in Embodiment 3. That is, description of the second side PC5 relay RLC channel release condition can be obtained by replacing "first side" in each item of the first side PC5 relay RLC channel release condition in Embodiment 3 with "second side".

Optionally, in step 405, for each second side PC5 relay RLC channel that needs to be added or modified, the relay UE transmits an *RRCReconfigurationSidelink* message to UE2. The message carries a second side PC5 relay RLC channel addition and modification list, and a PC5 relay RLC channel identifier in the list is set to be an identifier of the second side PC5 relay RLC channel that needs to be added or modified.

Or, optionally, for each second side PC5 relay RLC channel that needs to be released, the relay UE transmits an *RRCReconfigurationSidelink* message to UE2. The *RRCReconfigurationSidelink* message carries a second side PC5 relay RLC channel release list, and a PC5 relay RLC channel identifier in the list is set to be the identifier of the second side PC5 relay RLC channel that needs to be released.

Optionally, the *RRCReconfigurationSidelink* message transmitted to UE2 may further include a configuration of the first mapping. Optionally, if the *RRCReconfigurationSidelink* message needs to carry SL-DRB information (e.g., an SL-DRB identity), setting may be performed according to the SL-DRB information carried in the *RRCReconfigurationSidelink* message received from UE1.

Optionally, if step 405 exists, "performing a second side PC5 relay RLC channel addition procedure" in step 403 does not actually add a second side PC5 relay RLC channel, but the relay UE adds a second side PC5 relay RLC channel after UE1 or UE2 responds with an *RRCReconfigurationSidelinkComplete* message. The same operation also applies to the second side PC5 relay RLC channel modification and release procedures performed by the relay UE.

### Embodiment 5

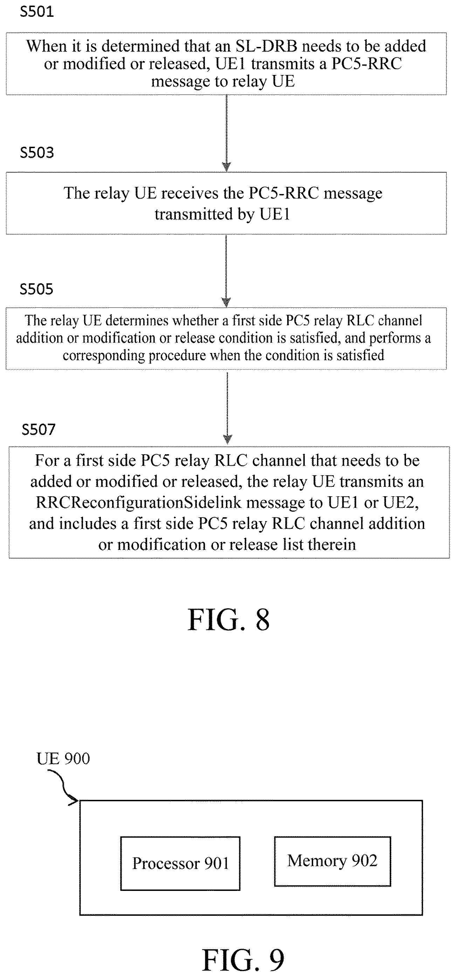

FIG. 8 is a flowchart of a method applied to user equipment (UE) according to Embodiment 5 of the present invention.

Optionally, in step 501, when it is determined that an SL-DRB needs to be added or modified or released, UE1 transmits a PC5-RRC message (e.g., an *RRCReconfigurationSidelink* message, or any other PC5-RRC message) to relay UE, and the message includes information about an added or modified or released SL-DRB.

Optionally, including information about an added SL-DRB may mean at least one of the following:
- including an SL-DRB addition and modification list in which an SL-DRB identity is not part of an SL-DRB list stored by the relay UE; and
- including an SL-DRB identity and/or an SL-DRB addition indication.

Optionally, including information about a modified SL-DRB may mean at least one of the following:
- including an SL-DRB addition and modification list in which an SL-DRB identity is part of an SL-DRB list stored by the relay UE; and
- including an SL-DRB identity and/or an SL-DRB modification indication. Optionally, information about a released SL-DRB is at least one of the following:
- including an SL-DRB release list in which an SL-DRB identity is part of an SL-DRB list stored by the relay UE; and
- including an SL-DRB identity and/or an SL-DRB release indication.

The SL-DRB identity may include, but is not limited to: an SL-DRB index or an SL-DRB ID.

Optionally, in step 503, the relay UE receives the PC5-RRC message transmitted by UE1.

Optionally, in step 505, the relay UE determines whether a first side PC5 relay RLC channel addition condition is satisfied. If the relay UE determines that the first side PC5 relay RLC channel addition condition is satisfied, a first side PC5 relay RLC channel addition procedure is performed. Optionally, step 505 is performed only if the PC5-RRC message received from UE1 includes the information about the added SL-DRB. Or, optionally, step 505 is performed when the relay UE and UE1 set up a PC5-RRC connection.

Or, optionally, in step 505, the relay UE determines whether a first side PC5 relay RLC channel modification condition is satisfied. If the relay UE determines that the first side PC5 relay RLC channel modification condition is satisfied, a first side PC5 relay RLC channel modification procedure is performed. Optionally, step 505 is performed only if the PC5-RRC message received from UE1 includes the information about the modified SL-DRB.

Optionally, in step 505, the relay UE determines whether a first side PC5 relay RLC channel release condition is satisfied. If the relay UE determines that the first side PC5 relay RLC channel release condition is satisfied, a first side PC5 relay RLC channel release procedure is performed. Optionally, step 505 is performed only if the PC5-RRC message received from UE1 includes the information about the released SL-DRB. Or, optionally, step 505 is performed when the relay UE and UE1 release a PC5-RRC connection.

Optionally, in step 507, for each first side PC5 relay RLC channel that needs to be added or modified, the relay UE transmits an *RRCReconfigurationSidelink* message to UE1. Optionally, for each first side PC5 relay RLC channel that needs to be added or modified, the relay UE transmits an *RRCReconfigurationSidelink* message to UE2. The message carries a first side PC5 relay RLC channel addition and modification list, and a PC5 relay RLC channel identifier in the list is set to be the identifier of the first side PC5 relay RLC channel that needs to be added or modified.

Or, optionally, for each first side PC5 relay RLC channel that needs to be released, the relay UE transmits an *RRCReconfigurationSidelink* message to UE1. Optionally, for each first side PC5 relay RLC channel that needs to be released, the relay UE transmits an *RRCReconfigurationSidelink* message to UE2. The *RRCReconfigurationSidelink* message carries a first side PC5 relay RLC channel release list, and a PC5 relay RLC channel identifier in the list is set to be the identifier of the first side PC5 relay RLC channel that needs to be released.

Optionally, the *RRCReconfigurationSidelink* message transmitted to UE1 and/or UE2 may further include a configuration of the first mapping. Optionally, if the *RRCReconfigurationSidelink* message needs to carry SL-DRB information (e.g., an SL-DRB ID), setting may be performed according to the SL-DRB information carried in the *RRCReconfigurationSidelink* message received from UE1.

Optionally, if step 507 exists, "performing a first side PC5 relay RLC channel addition procedure" in step 505 does not actually add a first side PC5 relay RLC channel, but the relay UE adds a first side PC5 relay RLC channel after UE1 or UE2 responds with an *RRCReconfigurationSidelinkComplete* message. The same operation also applies to the first side PC5 relay RLC channel modification and release procedures.

In the present embodiment, all second side PC5 relay RLC channel addition, modification and release conditions and procedures, and the relay UE transmitting messages to UE1 and UE2 to add, modify and release a second side PC5 relay RLC channel, are the same as corresponding processes of the first side PC5 relay RLC channel. That is, a description of processing of the second side PC5 relay RLC channel can be obtained by replacing "first side" in the specific description statements in step 505 and step 507 with "second side", and will not be repeated for the sake of space.

FIG. 9 is a simplified structural block diagram of user equipment (UE) according to the present invention. As shown in FIG. 9, the user equipment (UE) 900 includes a processor 901 and a memory 902. The processor 901 may include, for example, a microprocessor, a microcontroller, an embedded processor, and the like. The memory 902 may include, for example, a volatile memory (such as a random access memory (RAM)), a hard disk drive (HDD), a non-volatile memory (such as a flash memory), another memory, etc. The memory 902 has program instructions stored thereon. The instructions, when run by the processor 901, can perform the above method performed by user equipment described in detail in the present invention.

The program running on the device according to the present invention may be a program that enables a computer to implement the functions of the embodiments of the present invention by controlling a central processing unit (CPU). The program or information processed by the program may be temporarily stored in a volatile memory (for example, a random access memory (RAM)), a hard disk drive (HDD), a non-volatile memory (for example, a flash memory), or other memory systems.

The program for implementing the functions of the embodiments of the present invention may be recorded on a computer-readable recording medium. The corresponding functions may be achieved by reading programs recorded on the recording medium and executing the programs by a computer system. The phrase "computer system" herein may be a computer system embedded in the device, which may include operating systems or hardware (e.g., peripherals). The phrase "computer-readable recording medium" may refer to a semiconductor recording medium, an optical recording medium, a magnetic recording medium, a recording medium for programs that are dynamically stored for a short time, or any other recording medium readable by a computer.

Various features or functional modules of the device used in the above embodiments may be implemented or executed by circuits (for example, monolithic or multi-chip integrated circuits). Circuits designed to execute the functions described in this description may include general-purpose processors, digital signal processors (DSPs), application-specific integrated circuits (ASICs), field-programmable gate arrays (FPGAs) or other programmable logic devices, discrete gates or transistor logic, or discrete hardware components, or any combination of the above. The general-purpose processor may be a microprocessor, or may be any existing processor, controller, microcontroller, or state machine. The circuit may be a digital circuit or an analog circuit. When new integrated circuit technologies that replace existing integrated circuits emerge because of advances in semiconductor technology, one or a plurality of embodiments of the present invention may also be implemented using these new integrated circuit technologies.

Furthermore, the present invention is not limited to the embodiments described above. Although various examples of the embodiments have been described, the present invention is not limited thereto. Fixed or non-mobile electronic devices installed indoors or outdoors, such as AV equipment, kitchen equipment, cleaning equipment, air conditioners, office equipment, vending machines, and other household appliances, may be used as terminal devices or communications devices.

The embodiments of the present invention have been described in detail above with reference to the accompanying drawings. However, the specific structures are not limited to the above embodiments. The present invention also includes any design modifications that do not depart from the main idea of the present invention. In addition, various modifications can be made to the present invention within the scope of the claims. Embodiments resulting from appropriate combination of the technical means disclosed in the different embodiments are also included within the technical scope of the present invention. In addition, components with the same effect described in the above embodiments may be replaced with one another.

## Claims

1. A method performed by user equipment (UE), comprising:
receiving, by a UE, a message from a network, the message comprising a layer 2 UE-to-UE (L2 U2U) relay communication parameter configuration used to perform relay communication between the UE and another UE via a relay UE, the UE being one of a source UE and a target UE, and the other UE being the other of the source UE and the target UE; and
transmitting, by the UE in an RRC_CONNECTED state, a SidelinkUEInformationNR message to the network when at least one of the following situations occurs:
a source side PC5 quality of service (QoS) profile changes;
a target side PC5 QoS profile changes;
a sidelink data radio bearer (SL-DRB) changes;
a dedicated PC5 relay RLC channel configuration is requested for L2 U2U relay communication; and
a dedicated PC5 sidelink relay adaptation protocol configuration is requested for L2 U2U relay communication.

2. The method according to claim 1, wherein
the SidelinkUEInformationNR message comprises at least one of the following pieces of information:
a source side PC5 QoS profile;
a target side PC5 QoS profile;
an SL-DRB identity;
a dedicated PC5 relay RLC channel configuration request indication; and
a dedicated PC5 sidelink relay adaptation protocol configuration request indication.

3. A method performed by user equipment (UE), wherein
when UE receives a system message transmitted by a network and comprising an L2 U2U relay communication parameter configuration for performing relay communication between the UE and another UE via relay UE, the UE in an RRC_IDLE state or an RRC_INACTIVE state initiates a sidelink RRC reconfiguration procedure by using the L2 U2U relay communication parameter configuration carried in the system message, the UE being one of a source UE and a target UE, and the other UE being the other of the source UE and the target UE, or
when the UE receives a dedicated RRC message transmitted by the network and comprising an L2 U2U relay communication parameter configuration, the UE in an RRC_CONNECTED state initiates a sidelink RRC reconfiguration procedure using the L2 U2U relay communication parameter configuration carried in the RRC message, or
when the UE is out of coverage of the network, the UE initiates a sidelink RRC reconfiguration procedure using an L2 U2U relay communication parameter configuration carried in an NR sidelink pre-configuration.

4. The method according to claim 3, wherein
one of a source side PC5 relay RLC channel and a target side PC5 relay RLC channel is set to be a first side PC5 relay RLC channel, and the other is set to be a second side PC5 relay RLC channel, and
when it is determined that a first side PC5 relay RLC channel addition or modification or release condition is satisfied, the UE performs a first side PC5 relay RLC channel addition or modification or release procedure.

5. The method according to claim 4, wherein
for the first side PC5 relay RLC channel that needs to be added or modified or released, the UE transmits an RRCReconfigurationSidelink message to the relay UE or the other UE, and includes a first side PC5 relay RLC channel addition or modification or release list in the message.

6. The method according to claim 5, wherein
the relay UE receives the RRCReconfigurationSidelink message from the UE, and
when the RRCReconfigurationSidelink message comprises first side PC5 relay RLC channel addition or modification or release information, the relay UE determines whether a second side PC5 relay RLC channel addition or modification or release condition is satisfied, and, when it is determined that the condition is satisfied, performs a second side PC5 relay RLC channel addition or modification or release procedure.

7. The method according to claim 6, wherein
for the second side PC5 relay RLC channel that needs to be added or modified or released, the relay UE transmits an RRCReconfigurationSidelink message to the other UE, and includes a second side PC5 relay RLC channel addition or modification or release list in the message.

8. The method according to claim 3, wherein
when it is determined that a sidelink data radio bearer (SL-DRB) needs to be added or modified or released, the UE transmits a PC5-RRC message to the relay UE.

9. The method according to claim 8, wherein
the relay UE receives the PC5-RRC message from the UE, determines whether a first side PC5 relay RLC channel addition or modification or release condition is satisfied, and, when it is determined that the condition is satisfied, performs a first side PC5 relay RLC channel addition or modification or release procedure, and
for a first side PC5 relay RLC channel that needs to be added or modified or released, the relay UE transmits an RRCReconfigurationSidelink message to the UE or the other UE, and includes a first side PC5 relay RLC channel addition or modification or release list in the message.

10. User equipment, comprising:
a processor; and
a memory, having instructions stored therein,
wherein the instructions, when run by the processor, perform the method according to any one of claims 1 to 9.
